# EUROPÄISCHE PATENTSCHRIFT

(11) **EP 1 759 800 B1**
(45) Veröffentlichungstag und Bekanntmachung des Hinweises auf die Patenterteilung: **01.09.2010**
(21) Anmeldenummer: 06026456.1
(22) Anmeldetag: 26.05.2003
(51) Int. Cl.: B23K 11/30

(54) **Widerstandsschweissverfahren**
Method for resistance welding
Procédé de soudage par résistance

(30) Priorität: 03.07.2002 AT 9962002
(43) Veröffentlichungstag der Anmeldung: 07.03.2007
(62) Teilanmeldung aus: 03735133.5
(73) Patentinhaber: Fronius International GmbH, 4363 Pettenbach (AT)
(72) Erfinder: Stieglbauer, Walter, 4901 Manning (AT); Wimmer, Manfred, 4600 Wels (AT); Himmelbauer, Karin, 4493 Wolfern (AT)
(74) Vertreter: Heger, Georg

(56) Entgegenhaltungen:
- BE-A- 839 697
- DE-A1- 1 565 782
- US-A- 5 973 287
- PATENT ABSTRACTS OF JAPAN Bd. 1996, Nr. 09, 30. September 1996 (1996-09-30) -& JP 08 118037 A (FURUKAWA ELECTRIC CO LTD:THE), 14. Mai 1996 (1996-05-14)

## Beschreibung

Die Erfindung betrifft ein Widerstandsschweißverfahren, bei dem über Punktschweißwerkzeuge zwei Werkstücke, insbesondere Bleche, miteinander verschweißt werden, wobei zumindest zwei Elektroden unter Zwischenlegung der Werkstücke, insbesondere Bleche, gegeneinander gepresst werden und mit Energie beaufschlagt werden. Ein solches Verfahren ist aus der JP 10 029 071 A bekannt.

Derzeit werden beispielsweise im Karosseriebau vermehrt Bleche oder andere Werkstücke aus Aluminiumlegierungen und Magnesium, sowie verzinkte bzw. beschichtete Stahlbleche - teilweise in hochfester Ausführung - eingesetzt. Neben Vorteilen wie Gewichtsersparnis und guter Korrosionsbeständigkeit verursachen diese Materialien bzw. deren Beschichtungen, Probleme beim Fügen durch Punktschweißen. In erster Linie wirkt sich die gegenüber blankem Stahlblech stark verringerte Standmenge der verwendeten Punktschweißelektroden nachteilig aus. Der hohe Verschleiß der Elektroden verursacht hohe Kosten durch häufiges Nachbearbeiten der Elektrodenkontaktfläche bzw. durch die daraus resultierenden häufigen Elektrodenwechsel sowie eine verminderte Schweißqualität insbesondere vor einer Nachbearbeitung der Elektroden oder vor einem Elektrodenwechsel.

Zum Schutz der Punktschweißelektroden vor Verschmutzung bzw. einer Auflegierung der Elektrode durch den zu verschweißenden Werkstoff ist es bekannt, zwischen der Elektrode und dem Werkstück eine Metallfolie in Form eines Bandes beizulegen. Um einen gesicherten Bandvorschub zu erlangen, ist es notwendig, ein Festkleben des Bandes an der Kontaktfläche der Elektrode zu verhindern.

Hierzu ist aus der EP 0 830 915 B1 eine Vorrichtung zum Schutz der Elektroden beim Punktschweißen bekannt, bei der ein Band mit Hilfe einer Abwickelvorrichtung über die zu schützende Elektrode gezogen wird. Das Band besteht im Wesentlichen aus einer Kupfer-Nickellegierung oder aus reinem Nickel, mit einer Dicke von 0,02 mm bis 0,05 mm. Für eine längere Standfestigkeit ist die Elektrode, insbesondere die Elektrodenkappe mit Silber oder einem Silbermetalloxid beschichtet oder mit einem entsprechenden Einsatz versehen.

Weiters ist aus der US 5 552 573 A ein Band für ein Widerstandsschweißverfahren zum Schutz der Elektrode bekannt, bei dem das Band aus einem Grundmaterial besteht, auf dem beidseitig jeweils eine Schicht aufgetragen ist, wobei die Schichten aus dem gleichen oder einem unterschiedlichen Material bestehen können. Das Grundmaterial weist dabei eine Dicke von 0,02 mm bis 1 mm auf und besteht aus Eisen, Stahl, Kupfer oder einer Kupferlegierung. Die aufgetragenen Schichten weisen eine Dicke im Bereich von 1 µm bis 100 µm auf und können aus Nickel, Titan, Niob, Molybdän, Wolfram, Chrom, Kobalt oder Legierungen daraus, bestehen. Nachteilig ist bei derartigen Bändern, dass ein sehr hoher Herstellungsaufwand durch Beschichten oder Legieren notwendig ist und somit sehr hohe Kosten bei der Herstellung derartiger Bänder entstenen. Ein weiterer sehr wesentlicher Nachteil besteht darin, dass eine Vielzahl von Kombinationen der unterschiedlichsten Materialien möglich sind, so dass für die unterschiedlichen Anwendungen eine aufwendige und kostspielige Lagerung derartiger Kombinationsbänder notwendig ist, da der Benutzer keinerlei Möglichkeiten hat, sich selbstständig die unterschiedlichen Kombinationen zusammen zu stellen.

Eine Anwendung von Bändern zum Schutz der Elektroden beim Punktschweißverfahren sind weiters aus der DE 197 54 546 C1, der JP 10 029 071 A, der JP 08 118 037 A, JP 04 322 886 A oder der JP 05 192 774 A bekannt. Dabei wird bei den Punktschweißwerkzeugen das Band, welches über eine Wickelvorrichtung zu- und abgeführt wird, über die Elektrode als Schutz vor der Berührung der Elektrode mit dem Werkstück bzw. Bauteil positioniert, so dass bei einem Punktschweißprozess das Band am Werkstück bzw. Bauteil zum Anliegen kommt.

Die JP 06-344149 A zeigt ebenfalls ein Schutzband für die Elektroden beim widerstandsschweißen von Werkstücken, welches aus Kupfer oder dgl. mit einer Kupfer-Zinn-Legierungsbeschichtung besteht. Somit muss das Schutzband mit einer entsprechenden Beschichtung vorgefertigt werden.

Nachteilig ist bei den Verfahren gemäß der DE 197 54 546 C1 und der JP 04 322 886 A, dass das Band bei der Förderung über die Elektrode gezogen wird und somit aufgrund der Reibung zwischen der Elektrode und dem Band ein hoher Elektrodenverschleiß zustande kommt.

Bei den Verfahren gemäß der JP 10 029 071 A und der JP 08 118 037 A ist nachteilig, dass für die Bandförderung, insbesondere die Zu- und Abführung des Bandes, ein sehr komplexer Aufbau notwendig ist, so dass derartige Punktschweißwerkzeuge in der Praxis kaum einsetzbar sind. Mit derartigen Anlagen ist es nur möglich, einfache Bleche miteinander zu verschweißen. Eine Anwendung bei Punktschweißrobotern, insbesondere in der Autoindustrie, hingegen ist nicht möglich, da hierzu kleine kompakte Punktschweißwerkzeuge benötigt werden.

Der Erfindung liegt die Aufgabe zu Grunde, ein oben genanntes Widerstandsschweißverfahren zu schaffen, bei dem der Verschleiß der Elektrode stark vermindert wird. Eine weitere Aufgabe der Erfindung besteht darin, eine qualitativ hochwertige Schweißverbindung zu schaffen und ein formschlüssiges Aneinanderliegen der zu verschweißenden Werkstücke, insbesondere Bleche, zu erreichen.

Gelöst wird die erfindungsgemäße Aufgabe auch durch ein Widerstandsschweißverfahren gemäß dem Anspruch 1, bei dem über Punktschweißwerkzeuge zwei Werkstücke, insbesondere Bleche, miteinander verschweißt werden, wobei zumindest zwei Elektroden unter Zwischenlegung der Werkstücke, insbesondere Bleche, gegeneinander gepresst werden und mit Energie beaufschlagt werden, und wobei über ein an einer Elektrode beweglich angeordnetes Druckelement, welches die Elektrode überragt, die Berührung des Punktschweißwerkzeuges mit dem Werkstück erfasst wird, und bei Erfassung der Berührung das Element gegenüber der Elektrode verschoben wird, bis die Elektrode das Werkstück berührt. Durch die Verfahrensschritte wird erreicht, dass das Punktschweißwerkzeug ohne Gefahr eines Verschleißes der Elektrode an das Werkstück herangefahren werden kann und erst eine geringe Distanz vor dem Werkstück an dieses herangefahren wird.

Dabei kann die Erfassung der Berührung des Druckelements, mit dem Werkstück unter Zuhilfenahme elektrischer Energie erfolgen, indem das Element bzw. ein darin geführtes Band zum Schutz der Elektroden mit elektrischer Energie beaufschlagt wird.

Alternativ dazu, kann die Erfassung der Berührung des Elements mit dem Werkstück auch mechanisch erfolgen, beispielsweise mit einem am Element angeordneten Schalter.

Die Erfindung wird anschließend durch Ausführungsbeispiele näher beschrieben.

Es zeigen:
Fig. 1 eine Ansicht auf eine Einrichtung zum Schutz von Elektroden in vereinfachter, schematischer Darstellung;
Fig. 2 einen Schnitt durch die Schutzeinrichtung gemäß Fig. 1 entlang den Schnittlinien II-II;
Fig. 3 eine schematische Seitenansicht eines Punktschweißwerkzeuges;
Fig. 4 einen Schnitt durch ein Punktschweißwerkzeuges in vereinfachter, schematischer Darstellung; und
Fig. 5 eine Ansicht auf das Punktschweißwerkzeug gemäß Fig. 4 von Seiten des Werkstückes.

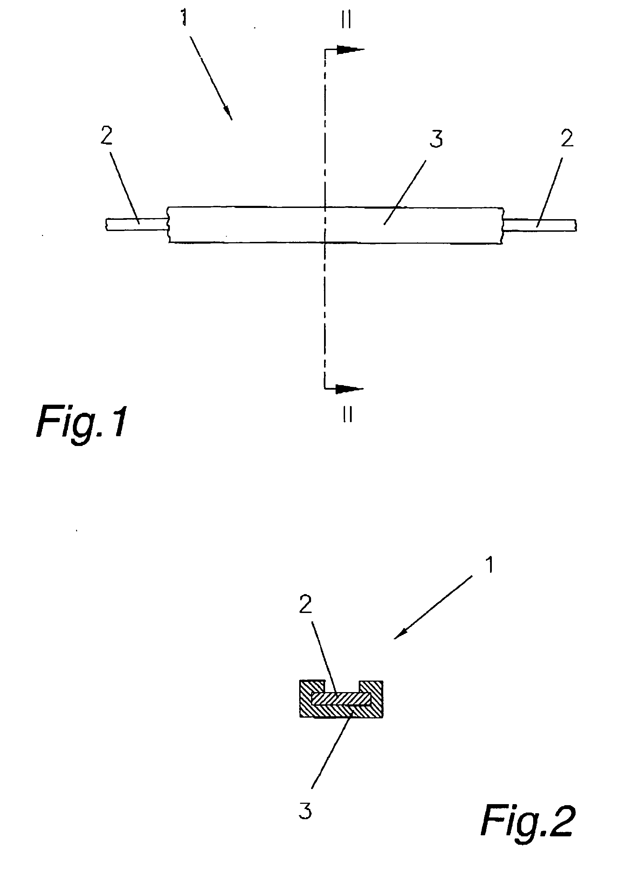

In den Fig. 1 und 2 ist ein Band 1 zum Schutz von Elektroden beim Widerstandsschweißen gezeigt.

Die verwendete Einrichtung zum Schutz der Elektroden umfasst ein Band 1, das aus mindestens zwei übereinander angeordneten Metallbändern 2, 3 aus verschiedenen Materialien. Die Metallbänder 2, 3 sind bevorzugt ausschließlich formschlüssig verbunden, ohne dass ein Stoffschluss stattfindet. Die Verbindung der Metallbänder 2, 3 kann durch Falzen, Kleben, Stanzen oder Schweißen erfolgen. Im dargestellten Ausführungsbeispiel ist ein mit Falzen verbundenes Band 1 gezeigt. Wesentlich ist, dass die Metallbänder 2, 3 für das Widerstandsschweißen in einfacher Form übereinander angeordnet sind, da hierdurch eine Abstimmung an die benachbarten Materialen des Werkstückes und der Elektrode ermöglicht wird. Selbstverständlich ist es auch möglich, dass die Metallbänder 2, 3 gegeneinander verschiebbar sind, wobei die Metallbänder 2, 3 nach einem Widerstandsschweißprozess mit unterschiedlicher Geschwindigkeit verschiebbar sind.

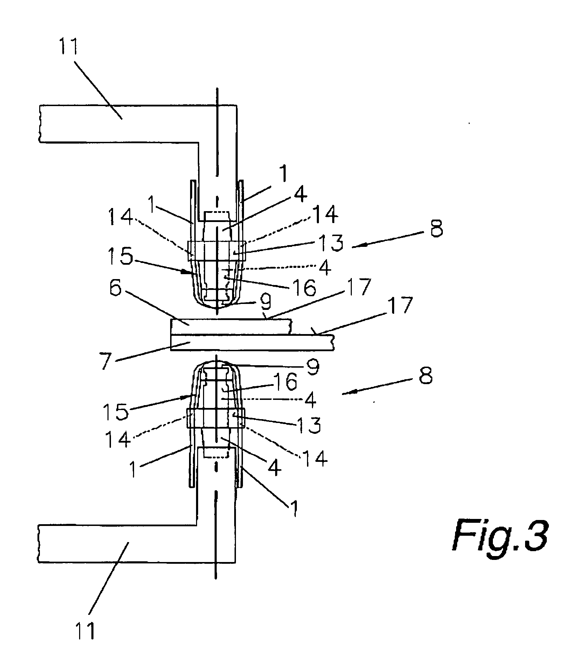

Derartige Bänder 1 zum Schutz von Elektroden 4 werden in der Praxis zwischen der Elektrode 4, insbesondere einer Elektrodenkappe 5, sowie der Oberfläche des zu verschweißenden Werkstückes, insbesondere Bleches 6, 7, und relativ zur Elektrode 4 verschiebbar angeordnet, wie dies schematisch in Fig. 3 dargestellt ist. Um die Bandführung und das Handhaben des Bandes 1 zu vereinfachen, ist es zweckmäßig, die Metallbänder 2, 3 miteinander zu verbinden. Dazu stehen prinzipiell mehrere Möglichkeiten, wie bereits erwähnt, zur Verfügung. Die unter technischen und wirtschaftlichen Aspekten am besten geeignete Variante, ist eine mechanische Verbindung der Metallbänder 2, 3, z.B. durch Falzen. Hierbei wird vorzugsweise das weichere der zumindest zwei Materialien um die seitlichen Ränder des härteren Metallbandes 2 gefalzt, wie dies in Fig. 2 ersichtlich ist. Durch eine nicht stoffschlüssige Verbindung der Metallbänder 2, 3 wird vermieden, dass sich das Elektrodenschutzband trotz der unterschiedlichen Ausdehnungskoeffizienten der unterschiedlichen Materialien nicht ungewollt verformt, und im weiteren Sinne dadurch Probleme bei der Bandführung auftreten. Je nach Anwendungsfall der Erfindung und der zu verschweißenden Materialien bzw. eingesetzten Materialien der Metallbänder 2, 3 ist es möglich, mehrere Schweißpunkte auf ein und den selben Bandabschnitt des Bandes 1 zu setzen, bevor es notwendig wird, dieses weiterzubewegen.

Durch dieses Band 1 ist es möglich, dass das der Elektrode 4 zugewandte Metallband 2 auf das Elektrodenmaterial abgestimmt wird, sowie das dem Werkstück, insbesondere Blech 6 oder 7, zugewandte Metallband 3 auf das Material des zu verschweißenden Werkstückes, insbesondere der Bleche 6, 7, abgestimmt wird. Dadurch kann die Schweißqualität bei geringem Kostenaufwand wesentlich verbessert werden und/oder die Standzeit der Elektroden 4 wesentlich erhöht werden. Somit kann beispielsweise das der Elektrode 4 zugewandte Metallband 2 aus einem Material mit geringer Klebeneigung zum Material der Elektrode 4 sowie das dem Werkstück, insbesondere Blech 6, 7, zugewandte Metallband 3 aus einem Material mit geringer Klebeneigung zu dem zu verschweißenden Werkstück bestehen. Bevorzugt besteht das der Elektrode 4 zugewandte Metallband 2 aus einem Material aus der Gruppe der Eisenmetalle, oder einer Legierung mit dem Hauptbestandteil aus der Gruppe der Eisenmetalle, sowie das dem zu verschweißenden Werkstück, insbesondere Blech 6, 7, zugewandte Metallband 3 aus Kupfer oder einer Kupferlegierung.

Dabei hat es sich beim Einsatz einer standardmäßigen Elektrode 4 aus Kupfer bzw. einer Kupferlegierung und einem beschichteten hochfesten Stahlblech als vorteilhaft erwiesen, dass auf der der Elektrode 4 zugewandten Seite, z.B. Stahlblech, verwendet wird. Die Dicke des Metallbandes 2 sollte bevorzugt zwischen 0,05 mm und 0,15 mm betragen. Durch die hohe Festigkeit des Metallbandes 2 aus Stahlblech wird ein zuverlässiger Transport gewährleistet. Das dem zu verschweißenden Werkstück, insbesondere Blech 6, 7, zugewandte Metallband 3 kann z.B. aus reinem Kupfer bestehen. Die Dicke des Metallbandes 3 ist abhängig vom Material und der Materialstärke des zu verschweißenden Werkstückes, insbesondere Bleches 6, 7, bzw. von den Schweißparametern, wie beispielsweise der Stromhöhe oder der Wärmeeinbringung, und sollte bevorzugt zwischen 0,1 mm und 0,5 mm betragen. Beim Widerstandsschweißen von Werkstücken, insbesondere Blechen 6, 7, mit Beschichtungen, wie beispielsweise bei speziellen Werkstücken mit Zinkschichten mit oder ohne anorganischen Stoffen, besteht eine Neigung von Kupfer mit der Beschichtung eine chemische Verbindung einzugehen. Somit ist der Einsatz eines Metallbandes 3 aus Kupfer für derartige Bleche sehr vorteilhaft, da dadurch ein sauberes und spritzerfreies Widerstandsschweißen gewährleistet wird.

Der wesentlichste Vorteil bei einem derartigen Widerstandsschweißprozess mit einem Band 1 zum Schutz der Elektrode 4 liegt darin, dass das Band 1 an die verschiedensten Parameter, die für den Widerstandsschweißprozess wesentlich sind, angepasst werden kann. Hierbei sind die Materialien der übereinanderliegenden Metallbänder 2, 3 so aufeinander abgestimmt, dass beispielsweise ein gewünschter Wärmeeintrag erzielbar ist, wodurch auf die Schweißqualität Einfluss genommen werden kann. Weiters ist es möglich, dass das Band 1, insbesondere das der Elektrode 4 zugewandte Metallband 2, eine Schmelztemperatur höher 1000°C oder Leitfähigkeit höher 1 m/(Ω*mm²) aufweist, so dass ein Klebenbleiben des Bandes 1 an der Elektrode 4 verhindert wird. Durch entsprechende Variationen der beiden Metallbänder 2, 3 in Material und Dicke lässt sich der Wärmehaushalt des Schweißprozesses sehr wesentlich beeinflussen und verbessern.

Ein besonderer Vorteil eines derartigen Bandes 1 liegt vor allem auch darin, dass durch eine nicht stoffschlüssige Verbindung der Metallbänder 2, 3, also durch Verwendung zweier unabhängiger Metallbänder 2, 3, der Benutzer selbstständig derartige Bänder 1 herstellen kann und somit die für seinen Schweißprozess optimale Materialkombinationen schaffen kann.

In den Fig. 3 bis 5 ist ein Punktschweißwerkzeug 8 zum Widerstandsschweißen von Blechen 6, 7 oder Bauteilen gezeigt. Bevorzugt wird das Punktschweißwerkzeug 8 mit einer Wickelvorrichtung (nicht dargestellt) zum Auf- und Abwickeln von einem an einer Elektrode 4 quer anliegenden Band 1 eingesetzt, wobei bevorzugt ein Band 1, wie in den Fig. 1 und 2 beschrieben zum Einsatz kommt. Es ist jedoch auch möglich, dass bei dem erfindungsgemäßen Punktschweißwerkzeug 8 nur ein einteiliges Band 1 mit oder ohne einer auflegierten Schicht, wie aus dem Stand der Technik bekannt, eingesetzt werden kann.

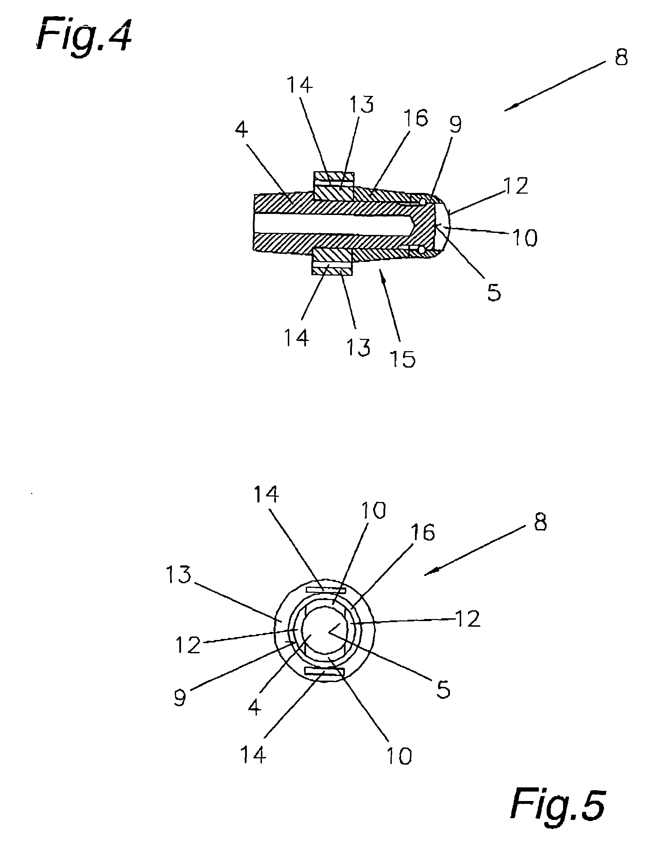

Um die Elektrode 4 ist im Bereich einer Elektrodenkappe 5 bzw. einer Kontaktfläche der Elektrode 4 mit dem Werkstück, insbesondere Blech 6, 7, ein Druckelement 9 angeordnet. Das Druckelement 9 ist beweglich an der Elektrode 4 angeordnet und beaufschlagt das Werkstück mit zusätzlichem Druck. Wird das Punktschweißwerkzeug 8 mit dem Band 1 eingesetzt, so weist das Druckelement 9 bevorzugterweise eine Führung 10, insbesondere an der Stirnfläche, für das Band 1 auf, wobei das Druckelement 9 zum Abheben des Bandes 1 von der Elektrode 4 ausgebildet ist, so dass das Druckelement 9 während oder nach dem Öffnen einer Schweißzange 11, wie schematisch in Fig. 4 angedeutet, oder einer funktionsähnlichen Apparatur das Band 1 von der Elektrodenoberfläche bzw. der Elektrodenkappe 5 abhebt. Die Führung 10 im Druckelement 9 ist derart ausgebildet, dass das Band 1 mit einer Stirnfläche 12 des Druckelements 9 ebenflächig abschließt. Selbstverständlich ist es auch möglich, dass die Führung für das Band 1 im Druckelement 9 derart ausgebildet ist, dass das Band 1 über die Stirnfläche 12 des Druckelements 9 ragt.

Bei dem dargestellten Ausführungsbeispiel besteht das Punktschweißwerkzeug 8 aus einem ringförmigen Aufbau, wobei das Druckelement 9 aus einem Metallring mit geringerer elektrischer Leitfähigkeit als jene der Elektrode 4 besteht. Das Druckelement 9 ist axial an der zylindrischen Elektrode 4 verschiebbar angeordnet. Im entlasteten Zustand, d.h. bei geöffneter Schweißzange 11 überragt das Druckelement 9 die Elektrode 4. Weiters kann an der Elektrode 4 ein Stützelement 13 angeordnet sein, wobei dieses Führungskanäle 14 zur Aufnahme des Bandes 1 aufweist. Zwischen dem Stützelement 13 und dem Druckelement 9 kann ein Mittel 15 zur Aufbringung einer Kraft auf das Druckelement, insbesondere ein Federelement, angeordnet sein, wodurch das Druckelement 9 mit entsprechendem Druck beaufschlagt und entlang der Elektrode 4 verschoben werden kann.

Im dargestellten Beispiel wird das Druckelement 9 bzw. die Bandführung durch eine Elastomerfeder 16 nach vorne gepresst. Natürlich kann das Druckelement 9 auch anders, z.B. pneumatisch, hydraulisch oder elektrisch betätigt werden. Somit übt das Druckelement 9 einen hohen Druck bzw. Kraft auf das Werkstück, insbesondere Blech 6, 7, aus, wenn dieser bei aktivierter Schweißzange 11 gegen das Werkstück, insbesondere Blech 6, 7, gepresst wird. Beim Schließen der Schweißzange 11 wird das Druckelement 9 durch das Aufsetzen am Werkstück, insbesondere Blech 6, 7, nach hinten gedrückt, bis die Elektrode 4, insbesondere die Elektrodenkappe 5, über das Band 1 die Blechoberflächen 17 des Werkstücks kontaktiert. Beim Öffnen der Schweißzange 11 wird das Druckelement 9 durch die Mittel 15 zur Kraftaufbringung, insbesondere die Elastomerfeder 16 oder ein anderes Antriebsmittel, nach vorne gedrückt. Wegen der bewusst hergestellten Zugspannung und der unvermeidbaren Steifigkeit des Bandes 1 wird es von der Elektrodenoberfläche, insbesondere der Elektrodenkappe 5, zwangsweise distanziert.

Das Druckelement 9 drückt also während des Schweißprozesses teilweise auf die der Schweißzone naheliegenden Blechoberfläche 17 und verhindert dadurch ein ansonsten für Punktschweißen übliches Öffnen der beiden Werkstücke, insbesondere Bleche 6, 7. Dies erfolgt bei den aus dem Stand der Technik bekannten Widerstandsschweißverfahren deshalb, da während des Schweißprozesses Wärme und ein punktueller Druck über die Elektroden 4 auf die Werkstücke, insbesondere Bleche 6, 7 eingebracht wird, die zu lokaler Ausdehnung der zu verschweißenden Werkstücke, insbesondere Bleche 6, 7, führt, wodurch punktgeschweißte Werkstücke, insbesondere Bleche 6, 7, zu einem Verzug/Verformen tendieren, d.h., dass sich die Bleche 6, 7 voneinander wegbewegen bzw. aufbiegen und somit ein Spalt zwischen den Blechen 6, 7 entsteht. Dies wird durch die spezielle Ausgestaltung des erfindungsgemäßen Punktschweißwerkzeuges 8 verhindert, da zusätzlich zur Elektrode 4 noch über das Druckelement 9 ein entsprechend hoher Druck auf die Blechoberfläche 17 des Bleches 6, 7 ausgeübt wird, wodurch ungünstige Effekte auf einfache Art und Weise vermieden werden können.

Durch die zusätzliche Krafteinwirkung des Druckelements 9 auf das Werkstück bzw. Blech 6, 7 wird also erreicht, dass das prozessbedingte Aufbiegen bzw. Wölben der Bleche 6, 7 verhindern wird, da die Elektrode 4 und das Druckelement 9 gleichzeitig einen entsprechenden Druck auf das Werkstück bzw. Blech 6, 7 ausüben. Selbstverständlich ist es möglich, dass bei entsprechender Ausbildung des Mittels 15 zur Kraftaufbringung der Druck bzw. die Kraft mit der das Druckelement 9 auf das Werkstück, insbesondere Blech 6, 7, drückt, einstellbar ist.

Das allfällige Band 1 wird während bzw. nach dem Abheben der Elektrode 4 vom Werkstück, insbesondere Blech 6, 7, zwangsweise bevorzugt mechanisch über das Mittel 15 zur Kraftaufbringung von der Punktschweißelektrode 8 abgehoben. Dadurch wird der Kraftaufwand zum Weiterbewegen des Bandes 1 vermindert und in weiterer Folge Bandabrisse vermieden. Dadurch ist die Zuverlässigkeit der Vorrichtung bzw. des Schweißprozesses gewährleistet. Dabei hat es sich als sehr vorteilhaft erwiesen, das Band 1 nach jedem Schweißpunkt von der Elektrodenoberfläche bzw. Elektrodenkappe 5 abzuheben. Damit ergeben sich mehrere Vorteile. Da das Band 1 vor dem Verschieben abgehoben wird, wird die Elektrode 4 entsprechend geschont und nicht durch das darüber gezogene Band 1 verschlissen. Die Elektrode 4 bleibt dadurch länger formbeständig und ein Ankleben des Bandes 1 an der Elektrode 4 wird auch bei mehrfachem Schweißen am gleichen Bandabschnitt verhindert. Die Zuverlässigkeit der gesamten Apparatur bzw. des Schweißprozesses wird somit sehr erhöht, da insbesondere durch die Reduzierung der Reibung bzw. durch die Verringerung der notwendigen Transportkraft Bandrisse vermieden werden. Die selbe Stelle des Bandes 1 kann daher mehrfach verwendet werden, ohne zu riskieren, dass das Band 1 an der Elektrodenoberfläche bzw. Elektrodenkappe 5 anhaftet oder damit verschweißt, wodurch erhebliche Bandmengen eingespart werden können.

Dadurch dass das Druckelement 9 als Sensor für die Erfassung der Berührung bzw. Kontaktierung des Punktschweißwerkzeuges 8 mit dem Werkstück, insbesondere Blech 6, 7, ausgebildet ist wird über das Druckelement 9 die Berührung mit dem Werkstück erkannt. Daraufhin können entsprechende Steuerabläufe eingeleitet werden.

Hierzu wird das Druckelement 9, beispielsweise mit elektrischer Energie, insbesondere mit einem Spannungspotential, beaufschlagt, während das Gegenpotential am Werkstück angelegt ist. Berührt nunmehr das Druckelement 9 die Werkstückoberfläche bzw. Blechoberfläche 17 so wird der Stromkreis geschlossen. Durch entsprechende Auswertung mit Hilfe einer Steuervorrichtung (nicht dargestellt) kann somit erkannt werden, dass eine Berührung des Druckelements 9 auf dem Werkstück stattgefunden hat. Die Steuervorrichtung kann nunmehr unterschiedliche Verfahrensabläufe einleiten.

Durch die selbstständige Erkennung der Berührung des Druckelements 9 am Werkstück ist es nunmehr möglich, den Schließvorgang der Schweißzange 11 zu optimieren. Beispielsweise kann bei Aktivierung der Schweißzange 11 zuerst ein schneller Schließvorgang ausgeführt werden, bis eine Berührung des Werkstückes zustande kommt, worauf anschließend nur mehr ein schweißdruckaufbauender Schließvorgang mit geringer Geschwindigkeit stattfindet. Dies hat den Vorteil, dass keine abrupte Krafteinwirkung auf die Werkstücke, insbesondere Bleche 6, 7, stattfindet und somit die Gefahr eines Verzuges der Bleche 6, 7 verhindert wird. Auch wird der Schließvorgang durch einen derartigen Vorgang sehr beschleunigt, da zuerst mit hoher Geschwindigkeit die Schweißzange 11 geschlossen werden kann und erst bei der Berührung ein langsamer Schließvorgang eingeleitet wird, wogegen bei dem aus den Stand der Technik bekannten System die Schweißzange 11 schon ab einer vorab programmierten Zangenposition, welche natürlich Sicherheitsabstände beinhaltet, mit einer geringen Geschwindigkeit geschlossen werden, um die abrupte Krafteinwirkung zu vermeiden. Somit wird ein optimierter Schließvorgang erreicht.

Das Druckelement 9 kann dabei isoliert an der Elektrode 4 angeordnet sein, Dadurch ist es möglich, dass ein getrennter Stromkreis vom Schweißstromkreis verwendet werden kann bzw. eine optimale Steuerung der Stromquelle, nicht dargestellt, ermöglicht wird.

Es ist aber auch eine mechanische Erkennung der Berührung bzw. Kontaktierung möglich, wobei hierzu das Druckelement 9 mit einem Schaltelement in Verbindung steht, so dass aufgrund der Verschiebung des Druckelements 9 das Schaltelement aktiviert wird und somit Steuervorgänge eingeleitet werden können bzw. durch die Aktivierung des Schaltelementes die Steuervorrichtung wiederum die Berührung der Werkstückoberfläche bzw. Blechoberfläche 17 auswerten kann.

## Patentansprüche

1. Widerstandsschweißverfahren, bei dem über Punktschweißwerkzeuge zwei Werkstücke, insbesondere Bleche (6, 7), miteinander verschweißt werden, wobei zumindest zwei an Schweißzangen (11) angeordnete Elektroden (4) unter Zwischenlegung der Werkstücke, insbesondere Bleche (6, 7), gegeneinander gepresst werden und mit Energie beaufschlagt werden, und zwischen den Elektroden (4) und den Werkstücken ein Band (1) zum Schutz der Elektroden (4) geführt wird, welches Band (1) bei geöffneter Schweißzange (11) von der Elektrode (4) abgehoben wird, **dadurch gekennzeichnet, dass** über ein an einer Elektrode (4) beweglich angeordnetes Druckelement (9), welches als Sensor für die Erfassung der Borührung des Punktschweißwerkzeugs mit dem Workstück ausgebildet ist, und welches die Elektrode (4) bei geöffneter Schweißzange (11) überragt und in welchem das Band (1) entlang der Elektrode (4) geführt wird, die Berührung der Elektrode (4) mit dem Werkstück erfasst wird, und dass bei Erfassung der Berührung das Druckelement (9) gegenüber der Elektrode (4) verschoben wird, bis die Elektrode (4) über das Band (1) das Werkstück berührt.

2. Verfahren nach Anspruch 1, **dadurch gekennzeichnet, dass** die Erfassung der Berührung des Druckelements (9) mit dem Werkstück unter Zuhilfenahme elektrischer Energie erfolgt, mit der das Druckelement (9) oder das im Druckelement (9) geführte Band (1) zum Schutz der Elektrode (4) beaufschlagt wird.

3. Verfahren nach Anspruch 1 oder 2, **dadurch gekennzeichnet, dass** die Erfassung der Berührung des Druckelements (9) mit dem Werkstück mechanisch erfolgt.

## Claims

1. A resistance-welding method in which two workpieces, in particular sheets (6, 7), are welded with each other by spot-welding tools, wherein at least two electrodes (4) arranged on welding tongs (11) are pressed at each other with the interposed workpieces, in particular sheets (6, 7), and are powered with energy, and a strip (1) is guided between the electrodes (4) and the workpieces for protecting the electrodes (4), said strip (1) being lifted off the electrode (4) with the welding tong (22) opened, **characterized in that** the contact of the electrode (4) with the workpiece is detected via a pressure element (9) which is movably arranged on an electrode (4) and designed as a sensor for detecting the contact of the spot-welding tool with the workpiece and which projects beyond the electrode (4) with the welding tong (11) opened and in which the strip (1) is guided along the electrode (4), and that the pressure element (9), upon detection of said contact, is displaced relative to the electrode (4) until the electrode (4) contacts the workpiece via the strip (1).

2. A method according to claim 1, **characterized in that** the detection of the contact of the pressure element (9) with the workpiece is effected by the aid of the electrical energy fed to the pressure element (9) or the strip (1) guided within the pressure element (9) for the protection of the electrode (4).

3. A method according to claim 1 or 2, **characterized in that** the detection of the contact of the pressure element (9) with the workpiece is effected mechanically.

## Revendications

1. Procédé de soudage par résistance, dans lequel deux pièces, en particulier des tôles (6, 7), sont soudées l'une à l'autre par des outils de soudage par points, dans lesquels au moins deux électrodes (4) disposées sur des porte-électrodes (11) sont serrées l'une contre l'autre en intercalant les pièces, en particulier les tôles (6, 7), et alimentées en énergie, et une bande (1) est guidée entre les électrodes (4) et les pièces pour protéger les électrodes (4), laquelle bande (1) est soulevée de l'électrode (4) lorsque le porte-électrodes (11) est ouvert, **caractérisé en ce que** le contact de l'électrode (4) avec la pièce est détecté par le biais d'un élément de pression (9) aménagé mobile sur une électrode (4), ledit élément se présentant sous la forme d'un capteur pour détecter le contact de l'outil de soudage par points avec la pièce qui fait saillie de l'électrode (4) lorsque le porte-électrodes (11) est ouvert et dans lequel la bande (1) est guidée le long de l'électrode (4), et **en ce que**, lorsque le contact est détecté, l'élément de pression (9) est déplacé par rapport à l'électrode (4) jusqu'à ce que l'électrode (4) touche la pièce par le biais de la bande (1).

2. Procédé selon la revendication 1, **caractérisé en ce que** la détection du contact de l'élément de pression (9) avec la pièce se fait à l'aide d'énergie électrique, avec laquelle l'élément de pression (9) ou la bande (1) guidée dans l'élément de pression (9) est alimenté(e) pour protéger l'électrode (4).

3. Procédé selon la revendication 1 ou 2, **caractérisé en ce que** la détection du contact de l'élément de pression (9) avec la pièce s'effectue mécaniquement.
